# EUROPÄISCHE PATENTSCHRIFT

(11) **EP 0 492 460 B1**
(45) Veröffentlichungstag und Bekanntmachung des Hinweises auf die Patenterteilung: **29.06.1994**
(21) Anmeldenummer: 91121837.8
(22) Anmeldetag: 19.12.1991
(51) Int. Cl.: B28B 7/00, B65D 19/24

(54) **Unterlagsbrett, insbesondere für die Herstellung von Beton-Erzeugnissen**
Pallet, in particular for making concrete products
Palette, en particulier pour la fabrication de produits en béton

(30) Priorität: 20.12.1990 DE 4040905
(43) Veröffentlichungstag der Anmeldung: 01.07.1992
(73) Patentinhaber: Bechtold, Heinz, D-64756 Mossautal (DE)
(72) Erfinder: Bechtold, Heinz, D-64756 Mossautal (DE)
(74) Vertreter: Konle, Tilmar, Dipl.-Ing.

(56) Entgegenhaltungen:
- DE-A- 1 756 873
- DE-A- 2 133 387
- DE-A- 3 600 174
- DE-U- 9 013 471
- DE-U- 9 017 200
- GB-A- 427 949
- GB-A- 770 334
- GB-A- 1 168 418
- GB-A- 2 226 806
- US-A- 3 552 329
- US-A- 4 397 246
- DERWENT JAPANESE PATENT REPORT, ACCESSION NO. 75-10046W [06], DERWENT PUBLICATIONS LTD., LONDON, GB

## Beschreibung

Die Erfindung bezieht sich auf ein Unterlagsbrett gemäß dem Oberbegriff des Patentanspruchs 1. Ein derartiges Unterlagsbrett ist aus der DE-U-9013471 bekannt.

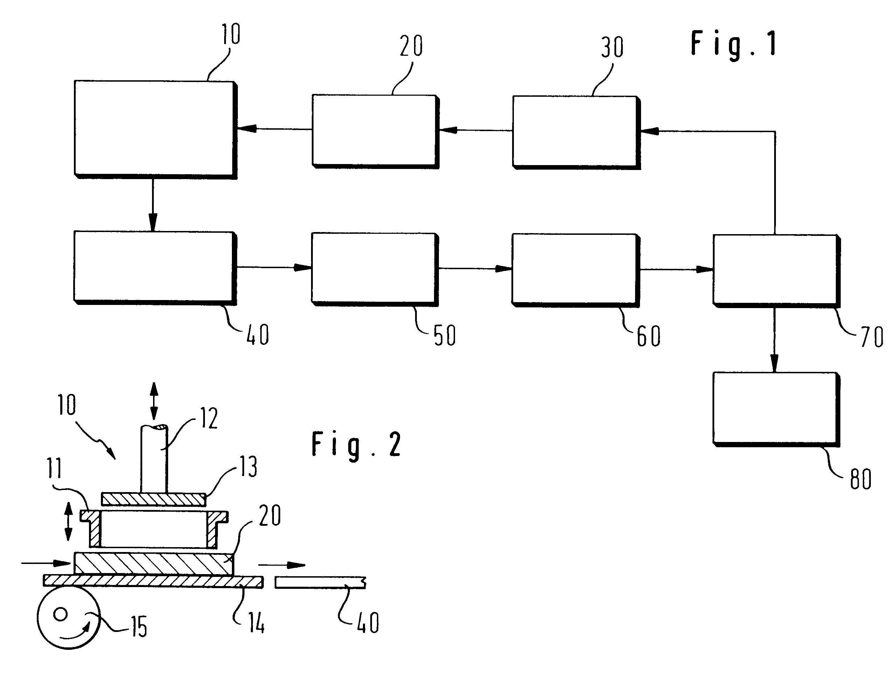

Die aus der DE-U-9013471 bekannte Herstellung von Betonprodukten (Verbundsteine, Platten, Blöcke, Bordsteine und dgl.) unter Verwendung eines Unterlagsbrettes ist in den Figuren 1 und 2 dargestellt. Ein aus einem Brettlager 30 entnommenes, leeres Unterlagsbrett 20 wird in eine Formmaschine 10 eingeführt, welche eine heb- und senkbare Form 11 sowie einen Preßstempel 12 mit Stempelplatte 13 aufweist. Das Unterlagsbrett 20 wird unterhalb der Form 11 auf einen Rütteltisch 14 geschoben, welcher von einem Exzenter 15 oder dgl. in Schwingungen versetzt werden kann. Nach Einschieben des Unterlagsbrettes 20 wird die Form 11 auf das Brett 20 abgesenkt und von oben mit einer Mischung aus Beton und Sand befüllt. Die eingefüllte Mischung wird durch den Druck des von oben her abgesenkten Preßstempels 12 und die Vibrationen des Rütteltisches 14 verdichtet.

Anschließend werden Preßstempel 12 und Form 11 hochgezogen und das Brett 20 mit dem daraufliegenden Formling aus der Formmaschine 10 heraus auf Transportschienen 40 geschoben. Von den Transportschienen 40 gelangen Brett 20 und Formling ggfs. über einen Stapelwagen 50 in einen Trockenraum 60, wo der Formling aushärtet. In einer Abnahmestation 70 wird der ausgehärtete Formling als fertiges Betonprodukt 80 von dem Unterlagsbrett 20 abgenommen, das dem Brettlager 30 zum Trocknen zugeführt wird.

Anstelle in einem Stapelwagen 50 auf dessen Schienen können die Unterlagsbretter 20 auch direkt übereinander gestapelt werden, wenn sie an ihrer Unterseite mit Stapelfüßen versehen werden, deren gegenseitiger Abstand ausreichend groß gewählt ist, damit der Formling auf dem darunter gestapelten Brett 20 zwischen die Stapelfüße des darüber gestapelten Brettes 20 paßt. Da das belastete Unterlagsbrett 20 nur an zwei Randbereichen auf den Schienen 40, den Schienen des Stapelwagens 40, den Regalschienen des Trockenraums 60 oder auf seinen Stapelfüßen aufliegt, müssen an die Biegesteifigkeit des Unterlagsbrettes 20 auch bei längerer Lagerung und bei eventuell zugeführter Trockungswärme hohe Anforderungen gestellt werden. Falls das Unterlagsbrett 20 nicht völlig plan ist, entstehen bei der Aushärtung des verfestigten Beton-Sand-Gemisches Haarrisse, die das fertige Betonprodukt unbrauchbar machen.

Um den genannten Anforderungen an die Biegesteifigkeit des Unterlagsbrettes 20 zu genügen, benutzt man Vollholzplatten, die aus Einzelbohlen zusammengesetzt, mit Torstählen zusammengezogen und an den Stirnseiten mit Metallprofilen geschützt sind. Als Holzarten sind Fichte, Lärche oder tropische Harthölzer mit Abmessungen von beispielsweise 1400 mm x 900 mm x 50 mm im Gebrauch, wobei diese Abmessgen je nach Anforderung bezüglich der Fläche variieren können und hinsichtlich der Stärke von der verwendeten Holzart (Weich- oder Hartholz) abhängig sind. Infolge ihrer Zusammensetzung aus Einzelbohlen weisen Holz-Unterlagsbretter an den Stoßstellen der Bohlen Fugen auf, welche die Glattheit der Oberfläche unterbrechen. Oberflächenveränderungen treten im Laufe der Zeit auch durch den unvermeidlichen Abrieb sowie durch klimatische Einflüsse auf das Holzmaterial auf. Ferner müssen Holz-Unterlagsbretter sorgfältig gewartet werden (regelmäßiges Einölen oder Einsprühen mit Imprägniermitteln sowie regelmäßiges Wenden, um abwechselnd beide Oberflächen zu benutzen), um ihre Brauchbarkeit auch über einen längeren Benutzungszeitraum von etwa 2 bis etwa 5 Jahren (je nach Holzart) zu erhalten.

Zum Ersatz des Holzmaterials durch ein Kunststoffmaterial ist es aus der bereits genannten DE-U-9013471 bekannt, das Unterlagsbrett aus Recycling-Kunststoffmaterial in einem Stück gegebenenfalls unter Anformung von Stapelfüßen herzustellen. Es entfallen Stoßfugen und sonstige Veränderungen der planen Oberfläche, wie sie bei Holz-Unterlagsbrettern auftreten. Ferner entfällt jedigliche Wartung und es ist eine unbegrenzte Lagerung möglich.

Zur Erhöhung der mechanischen Festigkeit können Fasern, ein Gewebe oder Verstärkungsrohre in das Kunststoffmaterial eingebettet werden. Alternativ können die Längskanten des bekannten Unterlagsbrettes mit Verstärkungsschienen armiert werden. Die Abriebfestigkeit des Recycling-Kunststoffmaterials ist erheblich größer als von Holzmaterial, woraus insgesamt eine wesentlich höhere Standzeit des Unterlagsbrettes im Vergleich zu einem Holzbrett resultiert. Die Verwertung von Kunststoff-Müll und der Ersatz von tropischen Harthölzern macht das Unterlagsbrett besonders umweltfreundlich. Durch die Verwendung von Kunststoff-Müll als Ausgangsmaterial sind die Herstellungskosten eines derartigen Unterlagsbrettes mit denen eines Holzbrettes vergleichbar, wenn nicht sogar geringer.

Demgegenüber besteht die Aufgabe der Erfindung darin, ein Unterlagsbrett aus Recycling-Kunststoffmaterial noch besser an seinen Einsatzzweck bei der Herstellung von Betonerzeugnissen anzupassen.

Diese Aufgabe wird erfindungsgemäß durch die kennzeichnenden Merkmale des Patentanspruchs 1 gelöst.

Vorteilhafte Ausgestaltungen und Weiterbildungen des erfindungsgemäßen Unterlagsbrettes ergeben sich aus den Unteransprüchen.

Die Erfindung wird im folgenden an Hand der in den Zeichnungen dargestellten Ausführungsbeispiele näher erläutert. Es zeigt:
- Fig. 1: ein Blockschaltbild einer Fertigungsanlage für Beton-Verbundsteine und -platten;
- Fig. 2: eine schematische Ansicht einer in der Anlage nach Fig. 1 vorgesehenen Formmaschine für die Herstellung von Beton-Verbundsteinen und -platten, und
- Fig. 3a - 3d: perspektivische Querschnitte durch vier verschiedene Ausführungsbeispiele eines erfindungsgemäßen Unterlagsbrettes, das in der Fertigungsanlage nach Fig. 1 verwendet und insbesondere in die Formmaschine nach Fig. 2 eingeschoben wird.

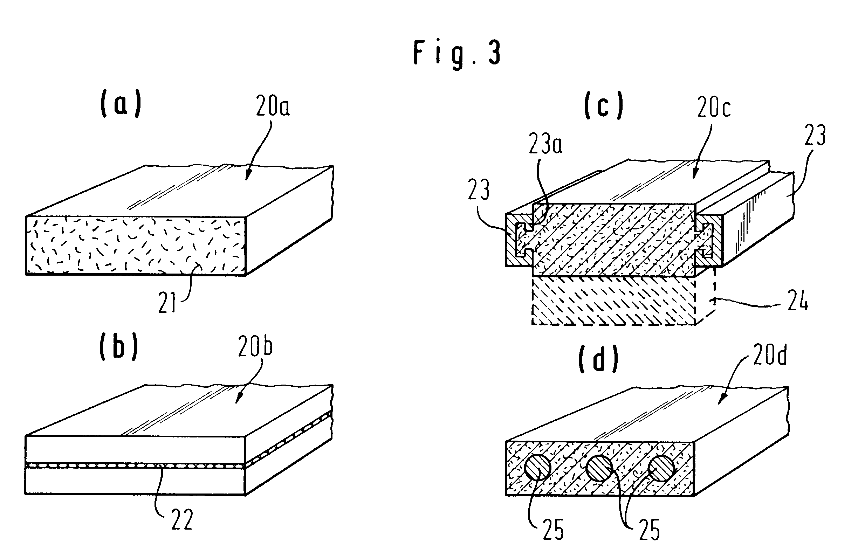

Die Fertigungsanlage nach Fig. 1 sowie die Formmaschine 10 nach Fig. 2 wurden bereits vorstehend in der Einleitung erläutert. Für das dort verwendete Unterlagsbrett 20 sind erfindungsgemäß die in den Fign. 3a bis 3d dargestellten Ausführungsformen vorgesehen.

Das in Fig. 3a veranschaulichte Unterlagsbrett 20a besteht aus einem prismenförmigen Brettkörper, der im wesentlichen aus Kunststoffabfällen (Recycling-Kunststoff) hergestellt ist. Die Kunststoffabfälle weisen einen hohen Anteil von Thermoplasten, insbesondere von Polyolefinen auf, welche bei der Aufgabe der Abfälle in einen Extruder (Walzenextruder oder Schneckenextruder) im wesentlichen durch die Friktionswärme aufgeschmolzen und homogenisiert werden. Falls der Kunststoffabfall auch nicht-schmelzbare Anteile aufweist, wird dieser in zerkleinerter Form aufgegebene Kunststoffabfall in dem Extruder noch weiter zerkleinert bzw. zermahlen und lagert sich in die Thermoplastschmelze in Form von Granulat ein. Die aus dem Extruder austretende Kunststoffschmelze (mit gegebenenfals darin eingelagertem, nicht-geschmolzenem Reststoffgranulat) wird in eine Brettform gefüllt und dort zur Aushärtung gebracht. Es ist aber auch möglich, die aus dem Extruder austretende Kunststoffschmelze mittels einer Kunststoffpresse in einer als Preßform ausgebildeten Brettform zu verpressen.

Als Beispiel für die Brettkörperherstellung werden Kunststoffabfälle verwendet, die im wesentlichen folgende Zusammensetzung haben:
- 70 - 90: Gewichts-% Polyolefine
- 0 - 15: Gewichts-% Polystyrol
- 0 - 10: Gewichts-% Polyvinylchlorid ggfs. Restbestandteile aus anderen Kunststoffen und/oder Schmutz.

Obwohl in vielen Fällen ein aus Recycling-Kunststoff hergestelltes Unterlagsbrett ausreichende mechanische Eigenschaften, insbesondere eine ausreichende Biegefestigkeit, aufweist, kann, wie in Fig. 3a angedeutet ist, in die plastifizierte Kunststoffmasse vor oder während des Einfüllens in die Brettform ein faserhaltiges oder pulverförmiges Material in loser, unregelmäßiger Form beigefügt werden. Die Fasern bzw. Pulverteilchen 21 (Fig. 3a) sind dann in einer Zufallsverteilung über den Brettquerschnitt verteilt, was zu einer Vergrößerung der mechanischen Festigkeit, insbesondere Biegesteifigkeit, führt. Es ist aber auch möglich, die Fasern bzw. Pulverteilchen nur in den mechanisch hochbelasteten Zonen des Brettquerschnitts vorzusehen oder dort anzureichern, um noch gezielter die Biegeeigenschaften des Brettes 20a zu verbessern. Die Konzentration der Fasern bzw. Pulverteilchen 21 ist so zu bemessen, daß sämtliche Fasern bzw. Pulverteilchen 21 in Thermplastmaterial eingebettet sind, um eine Wirkverbindung mit dem Thermoplastmaterial im Sinne einer Festigkeitserhöhung hervorzurufen.

Anstelle oder zusätzlich zu losen Fasern können auch die Fasern in zusammenhängender Form, beispielsweise in Form eines in Fig. 3b mit 22 bezeichneten Gewebes, Gewirks oder einer Fasermatte, in die plastifizierte Masse zur Brettherstellung eingebettet werden. In Fig. 3b liegt die Faserschicht (Gewebe, Gewirk, Matte) 22 in der neutralen Biegezone, d.h., in der Mittelebene, des Unterlagsbrettes 20b. Es ist ferner möglich, die Faserschicht mehr zur Brett-Oberseite hin zu verlegen sowie ggfs. mehr als nur eine Faserschicht vorzusehen.

Als Fasern kommen in allen Ausführungsformen (Fig. 3a und 3b) Glas-, Textil-, Natur- und Kunststoff-Fasern sowie Mischungen hiervon in Betracht. Bei Naturfasern eignen sich Holz- oder Sisalfasern. Die Länge der Fasern ist auf die gewünschte Brettfestigkeit abzustimmen.

Als pulverförmiges Material wird Kreide oder Asche (z.B. metallische Asche aus der Eisenverhüttung) verwendet, wobei es in allen Fällen auf eine möglichst innige Verbindung zwischen den Pulverteilchen bzw. Fasern und der Thermoplastschmelze ankommt.

Zusätzlich oder anstelle zu einer Faser- bzw. Pulverbeimischung gemäß Fign. 3a und 3b läßt sich die Festigkeit des Unterlagsbrettes durch Einbettung von Verstärkungsrohren 25 (Fig. 3d) in den Brettkörper oder durch Angießen von Verstärkungsschienen 23 (Fig. 3c) an den Längskanten des Brettkörpers erhöhen. Im Falle der Ausführungsform nach Fig. 3d verlaufen die Verstärkungsrohre 25 parallel zu den Längskanten des Brettkörpers, wobei zumindest im Bereich der Randzonen des Brettkörpers Verstärkungsrohre vorgesehen sind. Im dargestellten Beispielsfall von Fig. 3d ist zusätzlich in der Längsachse des Brettkörpers ein weiteres Verstärkungsrohr 25 vorgesehen. Die Anzahl der Verstärkungsrohre 25 und ihr Durchmesser hängt von der Stärke des Brettkörpers und den gewünschten Festigkeitseigenschaften des fertigen Unterlagsbrettes 20d ab. In jedem Falle sollte darauf geachtet werden, daß die Verstärkungsrohre 25 noch von ausreichend Thermoplastmaterial umgeben sind, um wiederum eine Wirkverbindung zwischen Thermoplastmaterial und Verstärkungsrohren zu gewährleisten. Als Material für die Verstärkungsrohre 25 kommt vorzugsweise Baustahl in Betracht, wobei die Verstärkungsrohre 25 ein Vollprofil oder ein Hohlprofil aufweisen können. Im Falle eines Hohlprofils ist das Innere der Verstärkungsrohre mit Thermoplastmaterial ausgegossen.

Bei der Ausführungsform nach Fig. 3c weisen die an den Längskanten vorgesehenen Verstärkungsschienen 23 ein im wesentlichen C-förmiges Profil auf. Zur Verankerung in dem Brettkörper können die freien Enden des C-profils mit hakenförmigen Fortsätzen 23a versehen werden. Die Verstärkungsschienen 23 werden beim Gießen des Brettkörpers in die Gießform eingelegt und mit eingegossen, so daß sie in Wirkverbindung mit dem Thermoplastmaterial des Brettkörpers treten und dessen Festigkeitseigenschaften erhöhen. Die Stärke (Höhe) des Brettkörpers kann so gewählt werden, daß die Ober- und Unterseite des fertigen Unterlagsbrettes 20c über die Ober- bzw. Unterseiten der Verstärkungsschienen 23 übersteht, wie in Fig. 3c maßstäblich übertrieben gezeigt ist. Dieser Überstand des Brettkörpers gewährleistet, daß als Auflagefläche für die Formlinge bei der Herstellung von Beton-Produkten nur die Kunststoff-Oberflächen des Unterlagsbrettes 20c wirksam sind. Es ist aber auch eine oberflächenbündige Anbringung der Verstärkungsschienen 23 möglich. Ferner sind auch andere Profilgebungen für die Verstärkungsschiene 23 möglich, z.B. ein T-Profil, dessen Schaft in dem Brettkörper verankert ist, oder ein U-Profil, dessen Schenkel in dem Brettkörper eingegossen sind.

Bei sämtlichen Ausführungsformen nach Fign. 3a bis 3c ist es leicht möglich, Stapelfüße 24 (Fig. 3c) einstückig an die Unterseite des Brettkörpers oder an dessen Ober- und Unterseite anzuformen bzw. den Brettkörper entsprechend zu gießen. Ferner ist auch ein Anschrauben von Stapelfüßen, wie dies bei Holzbrettern üblich ist, bei den erfindungsgemäßen Unterlagsbrettern möglich. Die Stapelfüße 24 können durchgehend über die Stirnseiten des Unterlagsbrettes 20c verlaufen, wie in Fig. 3c angedeutet ist, und zwar in Querrichtung zu den Verstärkungsschienen 23.

Es ist selbstverständlich möglich, die erfindungsgemäßen Unterlagsbretter auch für andere Zwecke als für die Herstellung von Beton-Produkten zu verwenden, beispielsweise als Transportpaletten oder Schaltungstafeln, wie sie im Bau Verwendung finden.

## Patentansprüche

1. Unterlagsbrett für die Herstellung von Betonerzeugnissen, wie beispielsweise Verbundsteinen, welches im wesentlichen aus thermoplasthaltigen Kunststoffabfällen durch Plastifizieren und Extrudieren bzw. Verpressen des thermoplastischen Kunststoffanteils hergestellt ist, **dadurch gekennzeichnet,** daß dem Kunststoffmaterial des Unterlagsbrettes (20 a bis 20 d) pulverförmiges Material in Form von Kreide oder Asche beigefügt ist.

2. Unterlagsbrett nach Anspruch 1, **dadurch gekennzeichnet**, daß die Längskanten des Unterlagsbrettes (20 c) mit Verstärkungsschienen (23) armiert sind.

3. Unterlagsbrett nach Anspruch 2, **dadurch gekennzeichnet**, daß die Höhe der Verstärkungsschienen (23) kleiner gewählt ist als die Höhe des Brettkörpers, derart, daß die Ober- und Unterseite des fertigen Unterlagsbrettes (20c) über die Ober- und Unterseite der Verstärkungsschienen (23) übersteht.

4. Unterlagsbrett nach Anspruch 2 oder 3, **dadurch gekennzeichnet**, daß die Verstärkungsschienen (23) ein im wesentlichen C-förmiges Profil aufweisen.

5. Unterlagsbrett nach Anspruch 4, **dadurch gekennzeichnet**, daß an den freien Enden des C-förmigen Profils hakenförmige Fortsätze (23a) vorhanden sind, welche in den Brettkörper eingegossen sind.

## Claims

1. Base boards for the manufacture of concrete products such as, for example, compound stones which is essentially made of thermoplastic containing synthetic material waste by plasticizing and extruding or pressing of the thermoplastic synthetic constituents, characterised in that there is added to the synthetic material of the base board (20a to 20d) pulverulent material in the form of chalk or ash.

2. Base board according to claim 1, characterised in that the longitudinal edges of the base board (20c) are reinforced with strengthening bars (23).

3. Base board according to claim 2, characterised in that the height of the strengthening bars (23) is selected smaller than the height of the board body such that the upper side and lower side of the finished base board (20c) projects beyond the upper side and lower side of the strengthening bars (23).

4. Base board according to claim 2, characterised in that the strengthening bars (23) have a substantially C-shaped profile.

5. Base board according to claim 4, characterised in that at the free ends of the C-shaped profile are present hook-shaped projections (23a), which are cast in the board bodies.

## Revendications

1. Palette de support pour la préparation de produits en béton comme par exemple d'éléments d'assemblage, que l'on prépare essentiellement à partir de résidus de matières synthétiques contenant une matière thermoplastique par plastification et extrusion ou compression de la partie de la matière synthétique thermoplastique, caractérisée en ce qu'on ajoute à la matière synthétique de la palette de support (20a à 20d) une matière pulvérulente sous forme de craie ou de cendre.

2. Palette de support selon la revendication 1 , caractérisée en ce que les bords longitudinaux de la palette de support (20c) sont armés avec des rails de renforcement (23).

3. Palette de support selon la revendication 2, caracérisée en ce que la hauteur des rails de renforcement (23) est choisie plus petite que la hauteur du corps de la palette, de manière que le côté supérieur et le côté inférieur de la palette de soutien (20c) prête à l'emploi dépasse le côté supérieur ou inférieur des rails de renforcement (23).

4. Palette de support selon la revendication 2 ou 3 , caractérisée en ce que les rails de renforcement (23) présentent un profil essentiellement en forme de C.

5. Palette de support selon la revendication 4 , caractérisée en ce qu'aux extrémités libres du profil en forme de C se trouvent des saillies en forme de crochet (23a) qui sont coulées dans le corps de la palette.
